# EUROPEAN PATENT APPLICATION

(11) **EP 3 340 155 A1**
(43) Date of publication of application: **27.06.2018**
(21) Application number: 17208707.4
(22) Date of filing: 19.12.2017
(51) Int. Cl.: G06Q 30/02, G06F 17/30

(54) **ELECTRONIC DEVICE AND METHOD FOR DISPLAYING WEB PAGE USING THE SAME**

(30) Priority: 22.12.2016 KR 20160176770
(71) Applicant: Samsung Electronics Co., Ltd., Gyeonggi-do 16677 (KR)
(72) Inventor: KIM, Kyungtae, 16677 Suwon-si, (KR); CHOI, Yoonjeong, 16677 Suwon-si, (KR); BAE, Hyerim, 16677 Suwon-si, (KR); LEE, Jungjik, 16677 Suwon-si, (KR); YOON, Sungmin, 16677 Suwon-si, (KR); LEE, Changho, 16677 Suwon-si, (KR)
(74) Representative: HGF Limited

(57) **Abstract**

Disclosed is a method for displaying a webpage, including displaying the webpage, detecting at least one content included in the displayed webpage, determining whether the detected content is advertisement content, moving the advertisement content to a predetermined area if the content is the advertisement content, and displaying the advertisement content in the predetermined area.

## Description

### BACKGROUND

### 1. Field of the Disclosure

The present disclosure relates generally to an electronic device, and more particularly, to a method for displaying a webpage by using the electronic device.

### 2. Description of the Related Art

Webpage advertisements are increasing in popularity. For example, when a specific webpage is displayed, advertisement content posted corresponding to the specific webpage can be included and displayed together with the specific webpage.

However, the inclusion of such advertisements on a webpage causes a user some difficulty in identifying information posted on the webpage. For example, when advertisement content is displayed by overlapping the information posted on the webpage, the user may have difficulty identifying the information. To cure this problem, an electronic device can provide an advertisement content blocking function, which can be set by the user. Generally, the electronic device can block information identified as advertisement content and prevent the advertisement information from being displayed on the webpage.

The electronic device may not receive advertisement content by blocking an identification (ID), i.e., uniform resource locator (URL) information corresponding to the advertisement content. Advertising companies posting advertisement content may frequently change the ID of corresponding advertisement content in order to defeat the advertisement content blocking function. The electronic device can perform a more complicated process to block the advertisement content; however, such a process is taxing on the electronic device and thus tends to reduce the overall performance of the electronic device.

The electronic device may identify useful information included in a webpage as advertisement content and block the useful information from being received by a user. In this case, an empty space is displayed in the area where the advertisement content would have been located, thereby inconveniently reducing use of the electronic device screen.

As such, there is a need in the art for a webpage display on an electronic device that does not limit the screen use when content is processed by the electronic device.

### SUMMARY

The present disclosure has been made to address the above problems and disadvantages, and to provide at least the advantages described below. Accordingly, an aspect of the present disclosure is to provide an electronic device and a method for processing contents that a user does not use in a webpage.

Another aspect of the present disclosure is to distinguish advertisement contents from at least one content included in a webpage, and to display the distinguished advertisement contents by moving these contents to a predetermined area, such as specific area in or out of a webpage, or on another electronic device.

Another aspect of the present disclosure is to reduce the size of the advertisement content, display the advertisement content by adjusting a color of the advertisement content, or display other data instead of the advertisement content.

Another aspect of the present disclosure is to display a web page in a manner that enables more abundant information to be provided in the webpage.

According to an aspect of the present disclosure, an electronic device includes a communication circuit, a display unit, at least one processor electrically connected to the communication circuit and the display unit, and a memory electrically connected to the at least one processor, wherein the memory stores instructions to be executed by the at least one processor and causing the at least one processor to detect at least one content included in a webpage if the webpage is displayed through the display unit, determine whether the detected content is advertisement content, and display the advertisement content by moving the advertisement content to a predetermined area if the detected content is the advertisement content.

According to another aspect of the present disclosure, a method for displaying a webpage in an electronic device includes displaying a webpage, detecting at least one content included in the displayed webpage, determining whether the detected content is advertisement content, moving the advertisement content to a predetermined area if the detected content is the advertisement content, and displaying the advertisement content in the predetermined area.

### BRIEF DESCRIPTION OF THE DRAWINGS

The above and other aspects, features, and advantages of embodiments of the present disclosure will be more apparent from the following description taken in conjunction with the accompanying drawings, in which:
FIG. 1 illustrates electronic devices in a network environment according to embodiments of the present disclosure;
FIG. 2 illustrates a configuration of an electronic device according to embodiments of the present disclosure;
FIG. 3 illustrates a configuration of a program module according to embodiments of the present disclosure;
FIG. 4 illustrates a method for moving advertisement content included in a webpage to a predetermined area according to embodiments of the present disclosure;
FIG. 5 illustrates a first example of moving advertisement content included in a webpage to a predetermined area according to embodiments of the present disclosure;
FIG. 6 illustrates a second example of moving advertisement content included in a webpage to a predetermined area according to embodiments of the present disclosure;
FIG. 7 illustrates a third example of moving advertisement content included in a webpage to a predetermined area according to embodiments of the present disclosure;
FIG. 8 illustrates a method for adjusting a size or color of advertisement content included in a webpage according to embodiments of the present disclosure;
FIG. 9 illustrates an example of adjusting a size or color of advertisement content included in a webpage according to embodiments of the present disclosure;
FIG. 10 illustrates a method for displaying predetermined data instead of advertisement content included in a webpage according to embodiments of the present disclosure; and
FIG. 11 illustrates an example of displaying predetermined data instead of advertisement content included in a webpage according to embodiments of the present disclosure.

### DETAILED DESCRIPTION

The present disclosure will be described with reference to the accompanying drawings. In the drawings, the same or similar elements are denoted by the same reference numerals even though they are depicted in different drawings. In addition, descriptions of well-known functions and constructions may be omitted for the sake of clarity and conciseness.

The terms and words used in the following description and claims are not limited to their dictionary meanings, but are merely used to enable a clear and consistent understanding of the present disclosure. Accordingly, it should be apparent to those skilled in the art that the following description of embodiments of the present disclosure is provided for illustration purposes only, and not for the purpose of limiting the present disclosure.

It is to be understood that the singular terms "a", "an", and "the", may be plural unless the context clearly dictates otherwise. Thus, reference to "a component surface", includes reference to one or more of such surfaces.

In the present disclosure, terms such as "include", "have", "may include" or "may have", may be construed to denote a certain characteristic, number, operation, constituent element, component or combination thereof, but should not be construed to exclude the existence of or a possibility of addition of one or more other characteristics, numbers, operations, constituent elements, components or combinations thereof.

In the present disclosure, the expressions "or" and "at least one of A or/and B" include any or all of combinations of words listed together. For example, the expression "A or B" or "at least A or/and B" may include A, B, or both A and B.

The terms "1", "2", "first", and "second", used in embodiments of the present disclosure, may modify various components of the embodiments, but do not limit the corresponding components, such as the sequence and/or importance of the components. The terms may be used for distinguishing one component from other components. For example, a first user device and a second user device indicate different user devices, although both are user devices. In addition, a first structural element may be referred to as a second structural element, and the second structural element may be referred to as a first structural element.

When it is stated that a component is "(operatively or communicatively) coupled to" or "connected to" another component, the component may be directly coupled or connected to another component, or an additional component may exist between the component and another component. In contrast, when it is stated that a component is "directly coupled to" or "directly connected to" another component, an additional component or other feature does not exist between the component and another component. In the present disclosure, the expression "configured (or set) to do" may be interchangeably used with "suitable for doing," "having the capacity to do," "designed to do," "adapted to do," "made to do," or "capable of doing," for example.

The expression "configured (or set) to do" should not be used to refer to only something in hardware for which it is "specifically designed to do," but instead, may indicate that the device is "capable of doing" something with other devices or parts. For example, the expression "a processor configured (or set) to do A, B and C" may refer to an embedded processor or a generic-purpose processor, such as central processing unit (CPU) or application processor (AP) that may execute one or more software programs stored in a memory device to perform corresponding functions.

An electronic device according to embodiments of the present disclosure may be a device including an antenna, such as a smart phone, a tablet personal computer (PC), a mobile phone, a video phone, an e-book reader, a desktop PC, a laptop PC, a netbook computer, a personal digital assistant (PDA), a portable multimedia player (PMP), a moving picture experts group phase 1 or phase 2 (MPEG-1 or MPEG-2) audio layer 3 (MP3) player, a mobile medical application, a camera, a wearable device including a head-mounted-device (HMD), such as electronic glasses, electronic clothes, an electronic bracelet, an electronic necklace, an electronic appcessary, an electronic tattoo, and a smart watch.

According to some embodiments, the electronic device may be a smart home appliance having an antenna, such as a television (TV), a digital video disc (DVD) player, an audio player, an air conditioner, a cleaner, an oven, a microwave oven, a washing machine, an air purifier, a set-top box, a TV box, such as Samsung HomeSync™, Apple TV™, or Google TV™, game consoles, an electronic dictionary, an electronic key, a camcorder, and an electronic frame.

According to some embodiments, the electronic device may include at least one of medical devices, such as magnetic resonance angiography (MRA), magnetic resonance imaging (MRI), computed tomography (CT), a scanner, and ultrasonic device devices, a navigation device, a global positioning system (GPS) receiver, an event data recorder (EDR), a flight data recorder (FDR), a vehicle infotainment device, a navigation device and a gyro compass for a vessel, avionics, a security device, a head unit for a vehicle, an industrial or home robot, an automated teller machine (ATM), and a point of sales (POS) device.

According to some embodiments, the electronic device may include at least one of furniture or a part of a building/structure, an electronic board, an electronic signature receiving device, a projector, and measuring devices including water, electricity, gas, and radio wave meters equipped with an antenna. The electronic device may also be a combination of the devices listed above, and may be a flexible device. The electronic device according to embodiments of the present disclosure is not limited to the above described devices.

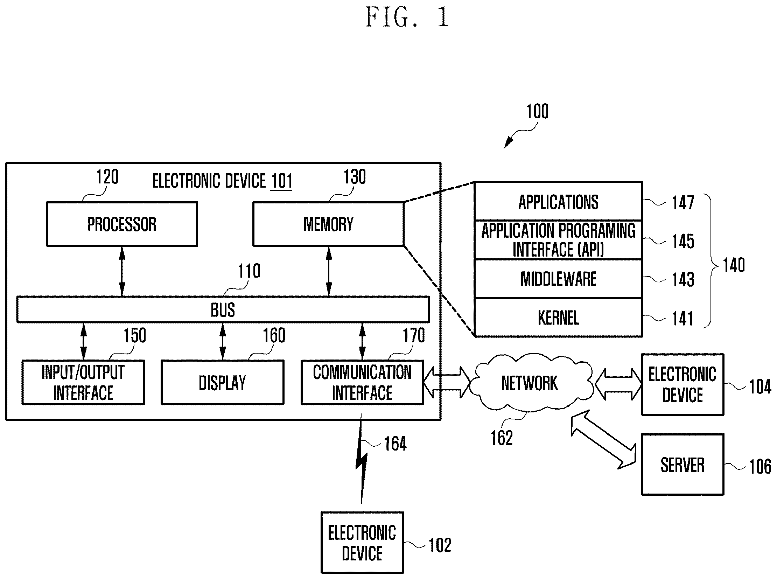

FIG. 1 illustrates a network environment including an electronic device according to embodiments of the present disclosure.

Referring to FIG. 1, an electronic device 101 of a network environment 100 may include a bus 110, a processor 120, a memory 130, an input/output interface 150, a display 160, and a communication interface 170. At least one of the above described components may be omitted from the electronic device 101 or other components may be included in the electronic device 101.

The bus 110 may be a circuit for connecting the above described components 120, 130, 150, 160, and 170 and transmitting communications, such as control messages and/or data, between the above described components.

The processor 120 is capable of including one or more of a CPU, an AP, and a communication processor (CP), and controlling at least one of the other components of the electronic device 101, and/or processing data or operations related to communications.

The memory 130 is capable of including a volatile memory and/or non-volatile memory, storing data or commands related to at least one of the other components of the electronic device 101, and storing software and/or a program module 140 which is capable of including a kernel 141, middleware 143, an application programming interface (API) 145, and applications 147 comprising an operating system (OS).

The kernel 141 is capable of controlling or managing system resources used to execute operations or functions of other programs, and provides an interface capable of enabling the middleware 143, API 145 and applications 147 to access and control/manage the individual components of the electronic device 101.

The middleware 143 is capable of mediating between the API 145 or applications 147 and the kernel 141 so that the API 145 or the applications 147 can communicate and exchange data with the kernel 141, and processing one or more task requests received from the applications 147 according to the priority. For example, the middleware 143 is capable of assigning a priority for use of system resources of the electronic device 101 to at least one of the applications 147, and processing one or more task requests according to a priority assigned to at least one application program, thereby performing scheduling or load balancing for the task requests.

The API 145 is configured to enable the applications 147 to control functions provided by the kernel 141 or the middleware 143, and is capable of including at least one interface or instructions for file control, window control, image process, and text control.

The input/output interface 150 is capable of transferring instructions or data, received from a user or external devices, to one or more components of the electronic device 101, and outputting instructions or data, received from one or more components of the electronic device 101, to the user or external devices.

According to embodiments, the memory 130 of the electronic device 101 may store data received from external device for distinguishing advertisement contents from contents. For example, the memory 130 may store an advertisement content list corresponding to the advertisement content, or an advertisement blocking list for blocking the advertisement content, and may store an ID of the area where the content is located or class information, information on the structure of an entire document object model (DOM), or URL information corresponding to the content, etc. in order to distinguish the advertisement contents.

The display 160 is capable of including a liquid crystal display (LCD), a flexible display, a transparent display, a light emitting diode (LED) display, an organic LED (OLED) display, micro-electro-mechanical systems (MEMS) display, an electronic paper display, and various types of content, such as texts, images, videos, icons, and symbols, and may be implemented with a touch screen capable of receiving touches, gestures, proximity inputs or hovering inputs, via a stylus pen or a user's body.

The communication interface 170 is capable of establishing communication between the electronic device 101 and an external device, such as a first electronic device 102, a second electronic device 104, and/or a server 106, via wired or wireless communication.

Wireless communication may employ, as a cellular communication protocol, at least one of long-term evolution (LTE), LTE advanced (LTE-A), code division multiple access (CDMA), wideband CDMA (WCDMA), universal mobile telecommunications system (UMTS), wireless broadband (WiBro), and global system for mobile communication (GSM), and may also include short-wireless communication 164 including at least one of WiFi, Bluetooth® (BT), near field communication (NFC), magnetic secure transmission (MST), and global navigation satellite system (GNSS) including at least one of GPS, global navigation satellite system (Glonass), Beidou navigation satellite system (Beidou), and Galileo, a European global satellite-based navigation system, according to GNSS using areas and bandwidths. Herein, "GPS" and "GNSS" may be interchangeably used. Wired communication may include at least one of a universal serial bus (USB), high definition multimedia interface (HDMI), recommended standard 232 (RS-232), and plain old telephone service (POTS). The network 162 may include at least one of a telecommunications network, such as local area network (LAN) or wide area network (WAN), the Internet, and a telephone network.

The first and second external electronic devices 102 and 104 may be identical to or different from the electronic device 101 in terms of type or otherwise. The server 106 is capable of including a group of one or more servers. According to embodiments, part or all of the operations executed on the electronic device 101 may be executed on another electronic device or a plurality of other electronic devices. When the electronic device needs to perform a function or service automatically or according to a request, the function or service may not be directly performed, but the electronic device is capable of requesting at least part of the function or service from other electronic devices that are capable of executing the requested function or additional functions, and transmitting the results to the electronic device 101. The electronic device 101 processes the received results, or further proceeds with additional processes, to provide the requested function or service. To this end, the electronic device 101 may employ cloud, distributed, or client-server computing technology.

According to embodiments, the processor 120 of the electronic device 101 can perform data communication with the external electronic devices 102 and 104 or the server 106 through the communication interface 170. For example, the processor 120 can receive data included in a webpage from the external electronic devices 102 and 104 or the server 106, display the webpage through the display 160 based on the received data, and store the received data in the memory 130. Programs, such as an application and browser for displaying the webpage, are stored in the memory 130, and the processor 120 can display the webpage by using the program.

According to embodiments, the processor 120 of the electronic device 101 can detect content included in a webpage and determine whether the detected content is advertisement content displayed by an advertising company, and may be identified as content to be disregarded while identifying information posted in a webpage. The processor 120 compares content with a "black list", such as advertisement blocking list stored in the memory 130, and can determine the content as advertisement content if the content is matched with information included in the "black list". The "black list" may include ID or class information of an area where content is located in a webpage, structure information on the entire DOM tree, or URL information corresponding to the content. The processor 120 can determine, based on a size or style (fixed or absolute) of the content, whether the content is advertisement content.

According to embodiments, the processor 120 of the electronic device 101 can remove the determined advertisement content from the webpage, and can display the determined advertisement content by moving the determined advertisement content to a predetermined area of the webpage. For example, the processor 120 can display at least one determined advertisement content by collecting together determined advertisement content in a predetermined area, such as a partial area of a webpage including an upper, lower, or side area, notice display area, at least one part of a screen of the electronic device 101, or indicator area. The predetermined area may be at least one part of a screen of another electronic device connected to the electronic device 101. The processor 120 can transmit the advertisement content to the external electronic devices 102 and 104, and output the advertisement content through the external electronic devices.

According to embodiments, the processor 120 of the electronic device 101 can display the determined advertisement content by reducing the size of the advertisement content or displaying the advertisement content in a blurred manner. If the advertisement content is an animation content, the processor 120 can display by reducing the frame rate of the advertisement content and displaying the advertisement content in a still image form, and can delete an animation effect from the corresponding advertisement content or display the advertisement content by changing the frame rate of the animation effect. The processor 120 can display predetermined data in an area where the advertisement content was located, instead of the determined advertisement content.

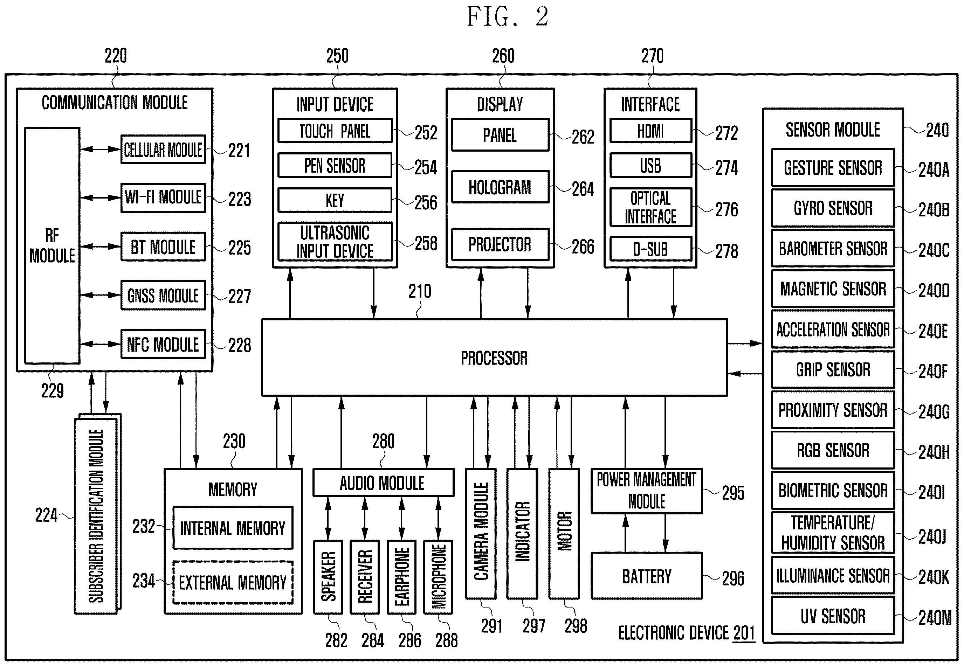

FIG. 2 is a detailed block diagram showing a configuration of an electronic device according to embodiments of the present disclosure.

Referring to FIG. 2, an electronic device 201 is capable of including part or all of the components in the electronic device 101 shown in FIG. 1.

The electronic device 201 is capable of including one or more processors 210, a communication module 220, a subscriber identification module (SIM) card 224, a memory 230, a sensor module 240, an input device 250, a display 260, an interface 270, an audio module 280, a camera module 291, a power management module 295, a battery 296, an indicator 297, and a motor 298.

The processor 210 is capable of driving an OS or an application program to control a plurality of hardware or software components connected to the processor 210, processing various data, and performing operations, may be implemented as a system on chip (SoC), and may further include a graphics processing unit (GPU) and/or an image signal processor (ISP). The processor 210 may also include at least part of the components shown in FIG. 2, e.g., a cellular module 221 may load commands or data received from at least one of the other components, such as a non-volatile memory, or a volatile memory, and process the loaded commands or data, and is also capable of storing various data in a non-volatile memory.

The communication module 220 may include the same or similar configurations as the communication interface 170 shown in FIG. 1, such as the cellular module 221, a WiFi module 223, a Bluetooth (BT) module 225, a GNSS module 227, including a GPS module, Glonass module, Beidou module or Galileo module, an NFC module 228, and a radio frequency (RF) module 229.

The cellular module 221 is capable of providing a voice call, a video call, a short message service (SMS) service, and an Internet service through a communication network, identifying and authenticating an electronic device in a communication network by using a SIM card, and performing at least part of the functions provided by the processor 210, and may include a CP.

Each of the WiFi module 223, the BT module 225, the GNSS module 227, and the NFC module 228, is capable of including a processor for processing data transmitted or received through the corresponding module, and may be included in one integrated chip (IC) or IC package.

The RF module 229 is capable of transmission/reception of communication signals, e.g., RF signals, and including a transceiver, a power amp module (PAM), a frequency filter, a low noise amplifier (LNA), and an antenna. At least one of the cellular module 221, WiFi module 223, BT module 225, GNSS module 227, and NFC module 228, is capable of transmission/reception of RF signals through a separate RF module.

The SIM card 224 is capable of including a SIM and/or an embedded SIM, and including unique identification information, such as an integrated circuit card identifier (ICCID), or subscriber information, such as an international mobile subscriber identity (IMSI).

The memory 230 is capable of including a built-in or internal memory 232 and/or an external memory 234. The built-in memory 232 is capable of including at least one of a volatile memory, such as a dynamic random access memory (DRAM), a static RAM (SRAM), and a synchronous dynamic RAM (SDRAM), and a non-volatile memory, such as a one-time programmable read only memory (OTPROM), a programmable ROM (PROM), an erasable and programmable ROM (EPROM), an electrically erasable and programmable ROM (EEPROM), a mask ROM, a flash ROM, a flash memory, such as a NAND flash memory, a NOR flash memory, and a hard drive, and a solid state drive (SSD).

The external memory 234 is also capable of including a flash drive, such as a compact flash (CF), a secure digital (SD), a micro-SD, a mini-SD, an extreme digital (xD), a multi-media card (MMC), and a memory stick, and being connected to the electronic device 201, functionally and/or physically, through various interfaces.

The sensor module 240 is capable of measuring/detecting a physical quantity or an operation state of the electronic device 201, and converting the measured or detected information into an electronic signal. The sensor module 240 is capable of including at least one of a gesture sensor 240A, a gyro sensor 240B, a barometer sensor 240C, a magnetic sensor 240D, an acceleration sensor 240E, a grip sensor 240F, a proximity sensor 240G, a color sensor 240H, such as a red, green, and blue (RGB) sensor, a biometric sensor 2401, a temperature/humidity sensor 240J, an illuminance sensor 240K, an ultraviolet (UV) sensor 240M, an E-nose sensor, an electromyography (EMG) sensor, an electroencephalogram (EEG) sensor, an electrocardiogram (ECG) sensor, an infrared (IR) sensor, an iris sensor and/or a fingerprint sensor. The sensor module 240 is capable of further including a control circuit for controlling one or more sensors included therein, and a processor, configured as part of the processor 210 or as a separate component, for controlling the sensor module 240. In this case, the processor 210 is capable of controlling the sensor module 240 while operating in a sleep mode.

The input device 250 is capable of including a touch panel 252, a (digital) pen sensor 254, a key 256, or an ultrasonic input unit 258. The touch panel 252 may be implemented with at least one of a capacitive touch system, a resistive touch system, an infrared touch system, and an ultrasonic touch system, and may further include a control circuit and a tactile layer to provide a tactile response to the user.

The (digital) pen sensor 254 may be implemented with a part of the touch panel or with a separate recognition sheet. The key 256 may include a physical button, an optical key, or a keypad. The ultrasonic input unit 258 is capable of detecting ultrasonic waves, created in an input tool, through a microphone 288, and identifying data corresponding to the detected ultrasonic waves.

The display 260 is capable of including a panel 262, a hologram unit 264, or a projector 266. The panel 262 may include the same or similar configurations as the display 160 shown in FIG. 1, may be implemented to be flexible, transparent, wearable and/or impact resistant, and may be incorporated into one module together with the touch panel 252. The hologram unit 264 is capable of displaying a stereoscopic image in the air by using light interference. The projector 266 is capable of displaying an image by projecting light onto a surface or screen. The screen may be located inside or outside of the electronic device 201. The display 260 may further include a control circuit for controlling the panel 262, the hologram unit 264, or the projector 266.

The interface 270 is capable of including a high- definition muldimedia interface (HDMI) 272, a universal serial bus (USB) 274, an optical interface 276, or a D-subminiature (D-sub) 278, may be included in the communication interface 170 shown in FIG. 1, and may include a mobile high-definition link (MHL) interface, an SD card/MMC interface, or an Infrared Data Association (IrDA) standard interface.

The audio module 280 is capable of providing bidirectional conversion between a sound and an electronic signal, and processing sound information input or output through a speaker 282, a receiver 284, earphones 286, or the microphone 288. At least part of the components in the audio module 280 may be included in the input/output interface 150 shown in FIG. 1.

The camera module 291 is capable of taking both still and moving images and includes one or more image sensors, such as a front image sensor or a rear image sensor, a lens, an image signal processor (ISP), and a flash, such as an LED or xenon lamp.

The power management module 295 is capable of managing power of the electronic device 201 and including a power management integrated circuit (PMIC), a charger IC, or a battery gauge. The PMIC may employ wired charging and/or wireless charging methods. Examples of the wireless charging method are magnetic resonance charging, magnetic induction charging, electromagnetic charging and acoustic charging. To this end, the PMIC may further include an additional circuit for wireless charging, such as a coil loop, a resonance circuit, and a rectifier. The battery gauge is capable of measuring the residual capacity, charge in voltage, current, or temperature of the battery 296, and may be either a rechargeable battery or a solar battery, but embodiments are not limited thereto.

The indicator 297 is capable of displaying a specific status of the electronic device 201 or a part thereof, such as a boot-up, message, and charging status. The motor 298 is capable of converting an electrical signal into mechanical vibrations, such as a vibration effect, a haptic effect and the like. Although not shown, the electronic device 201 is capable of further including a processing unit, such as GPU, for supporting a mobile TV, which processes media data pursuant to applicable standards, e.g., digital multimedia broadcasting (DMB), digital video broadcasting (DVB), and mediaFlo™.

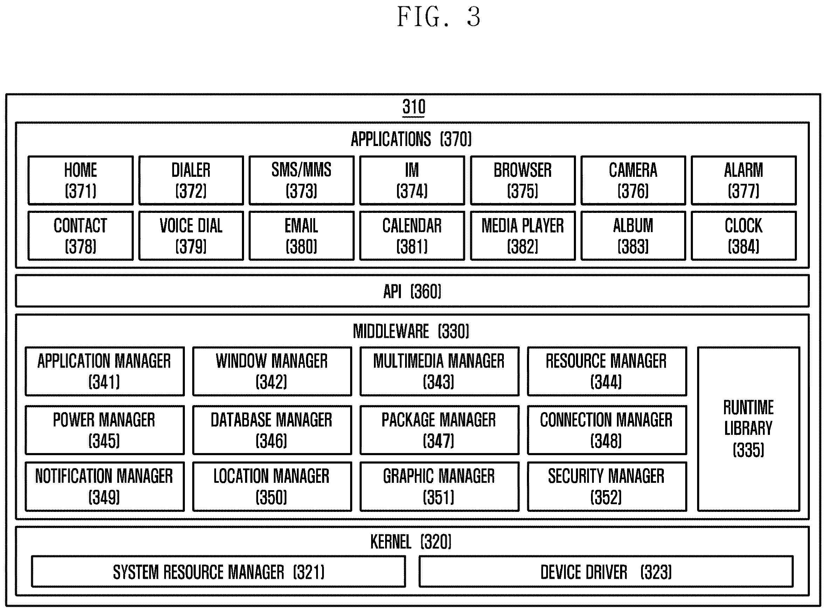

FIG. 3 is a block diagram of a programming module according to embodiments of the present disclosure.

Referring to FIG. 3, a program module 310, such as is capable of including an OS for controlling resources related to the electronic device and/or various applications running on the OS, which may be Android, iOS, Windows, Symbian, Tizen, or Bada for example.

The program module 310 is capable of including a kernel 320, middleware 330, API 360 and/or applications 370. At least part of the program module 310 may be preloaded on the electronic device or downloaded from a server.

The kernel 320 may include a system resource manager 321 and/or a device driver 323. The system resource manager 321 may include a process manager, a memory manager, and a file system manager, and may perform a system resource control, allocation and recall. The device driver 323 may include a display driver, a camera driver, a BT driver, a shared memory driver, a USB driver, a keypad driver, a WiFi driver, an audio driver, and an inter-process communication (IPC) driver.

The middleware 330 may provide a function required in common by the applications 370 through the API 360 to enable the applications 370 to efficiently use limited system resources within the electronic device, and may include at least one of a runtime library 335, an application manager 341, a window manager 342, a multimedia manager 343, a resource manager 344, a power manager 345, a database manager 346, a package manager 347, a connection manager 348, a notification manager 349, a location manager 350, a graphic manager 351, and a security manager 352.

The runtime library 335 may include a library module used by a complier to add a new function through a programming language while at least one of the applications 370 is executed, and may execute both input and output, management of a memory, and a function associated with an arithmetic function.

The application manager 341 may manage a life cycle of at least one of the applications 370. The window manager 342 may also manage graphical user interface (GUI) resources used on the screen. The multimedia manager 343 may detect a format required for reproducing various media files and perform an encoding or a decoding of a media file by using a codec suitable for the corresponding format. The resource manager 344 also manages resources such as a source code, a memory, or a storage space of at least one of the applications 370.

The power manager 345 may operate together with a basic input/output system (BIOS) to manage a battery or power supply and provide power information required for operations. The database manager 346 may manage generation, search and change of database to be used by at least one of the applications 370. The package manager 347 may manage an installation or an update of an application distributed in a package file form.

The connection manager 348 may manage a wireless connection such as WiFi or BT. The notification manager 349 may display or notify a user of an event such as an arrival message, an appointment, or a proximity alarm, in a manner that does not disturb the user. The location manager 350 may manage location information of the electronic device. The graphic manager 351 may manage a graphic effect provided to the user or a user interface related to the graphic effect. The security manager 352 provides a general security function required for a system security or a user authentication. According to an embodiment, when the electronic device has a call function, the middleware 330 may further include a telephony manager for managing a voice of the electronic device or a video call function.

The middleware 330 is capable of including modules of various combinations of functions of the above described components, and providing modules that are specialized according to types of operation systems to provide distinct functions. The middleware 330 may also be adaptively configured in such a manner as to dynamically remove existing components or include new components in such modules.

The API 360 may be a set of API programming functions, and may be provided with a different configuration according to an OS. For example, in Android or iOS, a single API set may be provided for each platform. In Tizen, two or more API sets may be provided.

The applications 370 may include one or more applications for performing various functions, such as a home 371, dialer 372, SMS/multimedia messaging service (MMS) 373, instant message (IM) 374, browser 375, camera 376, alarm 377, contact 378, voice dial 379, email 380, calendar 381, media player 382, album 383, clock 384, and health care application for measuring amount of exercise or blood sugar level, and environment information, such as an application for providing atmospheric pressure, humidity, and temperature.

According to an embodiment, the applications 370 are capable of including an information exchange application for supporting information exchange between an electronic device and an external device, which application is capable of including a notification relay application for relaying specific information to external devices or a device management application for managing external devices.

For example, the notification relay application is capable of including a function for relaying notification information, created in other applications of the electronic device, such as an SMS/MMS application, email application, health care application, or environment information application to external devices. In addition, the notification relay application is capable of receiving notification information from external devices to provide the received information to the user.

The device management application is capable of installing, removing or updating at least one function of an external device communicating with the electronic device, such as turning-on/off the external device or part of the external device, and controlling the brightness (or resolution) of the display, applications running on the external device, or services provided by the external device including a call service and a messaging service .

According to an embodiment, the applications 370 are also capable of including a health care application having specified attributes of an external device, applications received from an external device, and a preloaded application or third party applications that can be downloaded from a server. It should be understood that the components of the program module 310 may be called different names according to the type of OS.

According to embodiments, at least part of the program module 310 can be implemented with software, firmware, hardware or any combination thereof, and can be executed by a processor. At least part of the programing module 310 may also include modules, programs, routines, sets of instructions or processes and the like, in order to perform one or more functions.

An electronic device according to embodiments of the present disclosure may include a communication circuit, a display unit, at least one processor electrically connected to the communication circuit and the display unit, and a memory electrically connected to the at least one processor. The memory can store instructions to be executed so that the processor detects at least one content included in a webpage if the webpage is displayed through the display unit, determines whether the detected content is advertisement content, and displays the advertisement content by moving it to a predetermined area if the content is the advertisement content.

The processor can convert the advertisement content to an object based on the predetermined area and display the converted object by moving it to the predetermined area.

The conversion of the advertisement content can be performed by adjusting a size, a form, a structure, or a color of the advertisement content.

The processor can delete the content from the webpage if the content is the advertisement content, identify an area where the deleted advertisement content was located, and display predetermined data in the identified area, such asva notice message including a push message or an SMS message, and a telephone call signal.

According to embodiments, the processor can adjust a size or color of the content if the content is the advertisement content, can adjust a color, brightness, or chroma of the advertisement content, can adjust the structure of the webpage based on the size of the advertisement content if the size of the advertisement content is adjusted, can display at least one part of the content of the webpage in at least one part of the adjusted structure of the webpage, can restore the advertisement content if a user input is detected corresponding to the size or color adjustment of the advertisement content, and can delete an animation effect, change a frame of the animation effect, or display the advertisement content in a still image form, if the advertisement content includes the animation effect.

According to embodiments, the predetermined area may include a specific area corresponding to an upper, lower, or side area of the webpage; at least one part of a screen of the electronic device; or at least one part of a screen of another electronic device connected to the electronic device.

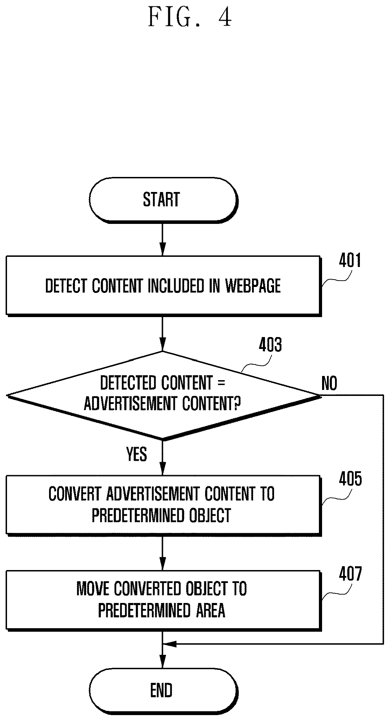

FIG. 4 illustrates a method for moving advertisement content included in a webpage to a predetermined area according to embodiments of the present disclosure.

In step 401, the processor of the electronic device detects content included in a webpage by using a program (application) stored in the memory 130. The webpage may include one or more contents and can be displayed through the display 160. The processor 120 can display one or more contents included in the webpage, and can detect content included in the webpage.

In step 403, the processor 120 determines whether the detected content is advertisement content. For example, the electronic device 101 can store a "black list" in the memory 130. The processor 120 can register information corresponding to advertisement content, such as an ID of the content, class information, structure information on a DOM tree, or URL information corresponding to content in the "black list, and can compare the detected content and content registered in the "black list" and determine whether they match each other. If the detected content and the content registered in the "black list" match each other, the processor 120 can determine the detected content as advertisement content,and can determine based on a size or style (fixed or absolute) of content whether the detected content is advertisement content.

If the detected content is advertisement content, the processor 120 converts the advertisement content to a predetermined object in step 405. For example, the processor 120 can convert the advertisement content to a thumbnail image, can convert the advertisement content to an object displayable in a predetermined area, and can adjust a size, form, structure, or color of the advertisement content so that the advertisement content can be displayed in the predetermined area. As a result, the processor 120 can display an object corresponding to the advertisement content. If the detected content is not the advertisement content, the method ends.

For example, if the predetermined area corresponds to a part of a screen, the size or form of the advertisement content may change corresponding to the size of the predetermined area. The size or form of the advertisement content may become smaller or larger, or it may be changed to a predetermined specific structure. The advertisement content can be modified so that a user can identify advertisement content, and the processor 120 can display the modified advertisement content on a screen. The user can identify the advertisement content intuitively through the object displayed on the screen. One or more advertisement contents may be included in a webpage, and may be converted to a predetermined object form. According to an embodiment, the object may be at least one of data included in the advertisement content, such as image, text, video, and link, or data converted to a different form.

In step 407, the processor 120 moves the converted object to a predetermined area, such as a lower area of the webpage, which can be a "predetermined area" set by a user and including a partial area of the webpage, such as upper, lower, or side area. The "predetermined area" may include another screen, such as notice display area or indicator area, different from the webpage, such as browser screen, and at least one part of a screen of another electronic device connected to the electronic device 101. The processor 120 can convert contents determined as advertisement content to a predetermined object and display one or more converted objects by moving them to a predetermined area.

According to an embodiment, at least one of steps 405 and 407 can be omitted. For example, the processor 120 can display the advertisement content by modifying the advertisement content to a predetermined object, or by moving the advertisement content to a predetermined area without modifying the advertisement content to a predetermined object.

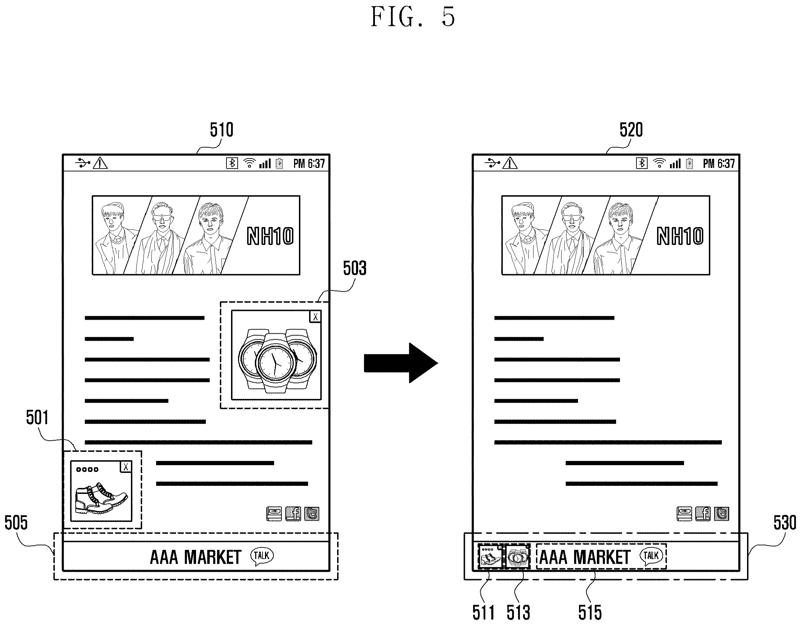

FIG. 5 illustrates a first example of moving advertisement content included in a webpage to a predetermined area according to embodiments of the present disclosure.

In FIG. 5, the processor 120 of the electronic device 101 can display a webpage through the display 160. Screen 510 shows a webpage including one or more contents. When displaying a webpage, the processor 120 can display one or more contents included in the webpage including first content 501, second content 503, and third content 505 as shown in screen 510.

The processor 120 can determine whether the content included in the webpage is advertisement content, such as by identifying whether the content corresponds to a "black list" stored in the memory 130. The processor 120 can determine the content as advertisement content based on a size, tag, orstyle (fixed or absolute) of the content.

According to embodiments, the processor 120 can display contents determined as advertisement content by converting the contents to a predetermined object. For example, the processor 120 can adjust a size, form, structure, or color of the advertisement content, and can display the converted object by moving the converted object to a predetermined area. In screen 520, the processor 120 can determine the first content 501, second content 503, or third content 505 as advertisement content, convert the advertisement contents to predetermined objects 511, 513, and 515, and move the converted objects to a predetermined area of the webpage. Screen 520 shows the first content 501, second content 503, and third content 505 converted to predetermined objects 511, 513, and 515 which are moved to a predetermined area 530. Although screen 520 shows that the predetermined area 530 is located at a lower part of the webpage, screen 520 is not limited thereto, and the predetermined objects 511, 513, and 515 can include a thumbnail indicating the advertisement content.

According to embodiments of the present disclosure, the electronic device can provide the advertisement content for a user in a predetermined object form while performing an advertisement content blocking function. Accordingly, the user may not miss necessary information from the contents classified as advertisement content.

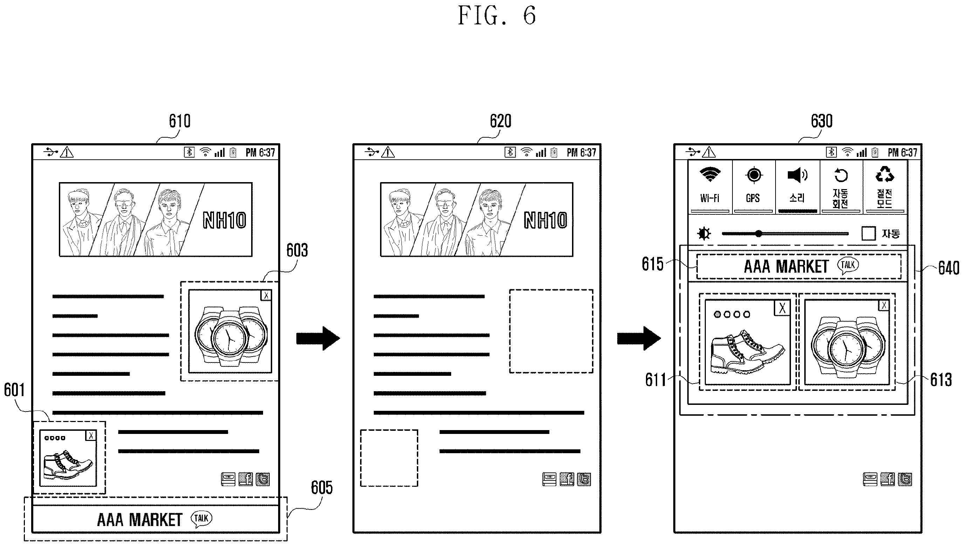

FIG. 6 illustrates a second example of moving advertisement content included in a webpage to a predetermined area according to embodiments of the present disclosure.

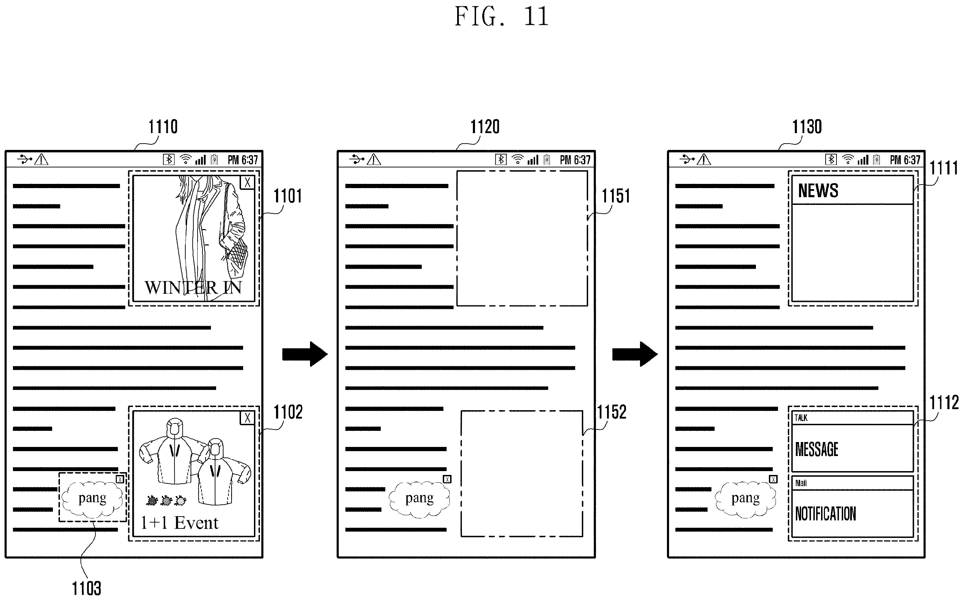

In FIG. 6, screen 610 shows a webpage including at least one content 601, 603, or 605. According to embodiments, the processor 120 can determine whether content included in the webpage is advertisement content. If the content is advertisement content, the processor 120 can delete or may not display the advertisement content as shown in screen 620. When displaying the webpage, the processor 120 can display an empty space, which is illustrated below in FIG. 11, for an area where the advertisement content is deleted, in which case the processor 120 can adjust the structure of the webpage in order to utilize the area where the advertisement content was located. For example, an area to be displayed with a text can be reduced because of the advertisement content included in the webpage. If the advertisement content is deleted, the processor 120 can add the area where the advertisement content was located to an area where the text is displayed.

According to embodiments, the processor 120 can display the contents determined as advertisement content by moving these contents to a predetermined area, such as part of a notice display area or an indicator area, other than the webpage. The processor 120 can display the advertisement content by moving the advertisement content to a specific area located at the outside of the webpage. For example, the processor 120 can convert the advertisement contents to predetermined objects 611, 613, and 615 and display the converted objects by moving them to an indicator area for displaying information, such as notice, time, date, and state of the electronic device. The indicator area is another page displayed if a touch is input from the uppermost area of the display 130 of the electronic device 101 in a downward direction, and can be easily identified by a user. Screen 630 shows advertisement contents of the converted objects 611, 613, and 615 which are moved to a partial area 640 of the indicator area.

According to embodiments, the advertisement content moved to the indictor area can be deleted, if the processor 120 moves the advertisement content from the current webpage to another webpage or does not display the webpage in the screen.

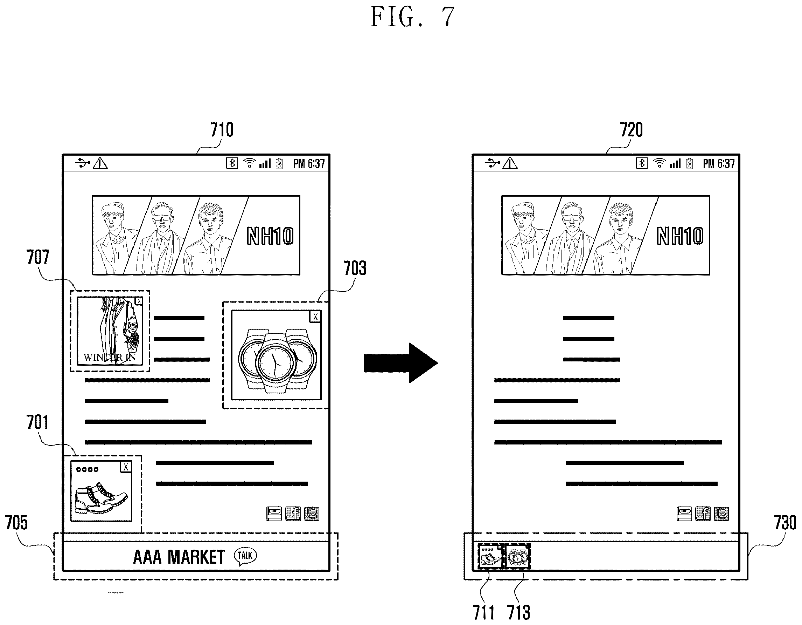

FIG. 7 illustrates a third example of moving advertisement content included in a webpage to a predetermined area according to embodiments of the present disclosure.

In FIG. 7, screen 710 may be a general screen displaying a webpage including at least one content 701, 703, 705, and 707. According to embodiments, the processor 120 can determine based on URL information corresponding to the content whether the content is advertisement content, and can distinguish advertisement content from contents included in the webpage by using TAG information.

For example, the advertisement content may include TAG (i.e., metadata) information, such as <ad> TAG. In screen 710, some contents from advertisement contents 701, 703, 705, and 707 may include <ad> TAG. In screen 720, the processor 120 can determine advertisement contents 701 and 703 from the contents 701, 703, 705, and 707 included in the webpage based on the <ad> TAG of the content or URL information corresponding to the content, and can convert the advertisement contents 701 and 703 to predetermined objects 711 and 713. The processor 120 can display the converted objects 711 and 713 by moving these objects to a predetermined area 730. In screen 720 screen, the processor 120 can display an empty space, as illustrated below in FIG. 11, for an area where the advertisement content was located; however, the function of the processor 720 is not limited to this example.

The electronic device 101 can transmit advertisement content to an external electronic device and output the advertisement content through the external electronic device. The electronic device 101 may be connected through a wireless communication network to other electronic devices 102 and 104, which may be wearable devices such as a smart watch. While providing information posted in a webpage for a user, advertisement content can be also provided for the user in various methods.

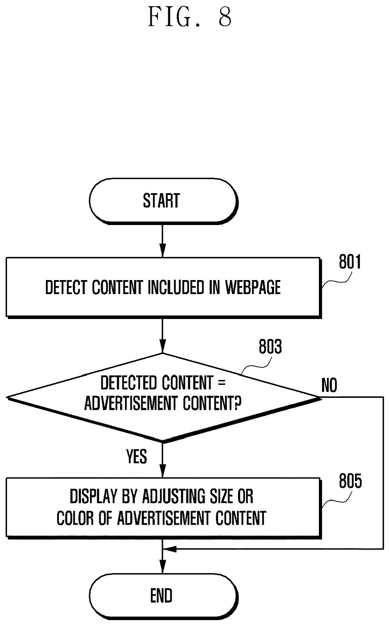

FIG. 8 illustrates a method for adjusting a size or color of advertisement content included in a webpage according to embodiments of the present disclosure.

In step 801, the processor 120 of the electronic device 101 detects content included in a webpage. In step 803, the processor 120 determines whether the detected content is advertisement content. Steps 801 and 803 of FIG. 8 are identical or similar to steps 401 and 403 of FIG. 4.

If the detected content is determined to be advertisement content in step 803, the processor 120 displays the advertisement content in step 805 by adjusting the size of the advertisement content. The processor 120 can display the advertisement content by adjusting the color of the advertisement content, such as brightness and chroma, and can display the advertisement content in a smaller size according to a size setting. If the size of the advertisement content becomes smaller, the processor 120 can adjust the structure of the webpage. For example, the processor 120 can fill a space formed by the size reduction of the advertisement content with a text, and can reduce an area occupied by the advertisement content and provide information posted in the webpage in a wider area. As the area occupied by the advertisement content is reduced, a visibility of a webpage to a user can be improved, improving the user's experience. If the detected content is not the advertisement content in step 803, the method ends.

According to embodiments, the processor 120 can display the advertisement content by adjusting the color of the advertisement content, such as by adjusting color, brightness, and chroma of the advertisement content.

According to embodiments, if the size of the advertisement content is adjusted or a user input is generated corresponding to the color adjustment of the advertisement content, the processor 120 can display the advertisement content in its original form, to prevent a user from missing useful information.

According to embodiments, if the advertisement content has an animation effect, the processor 120 can delete the animation effect or reduce a frame rate of the animation effect, such that the animation effect is displayed in a still image form.

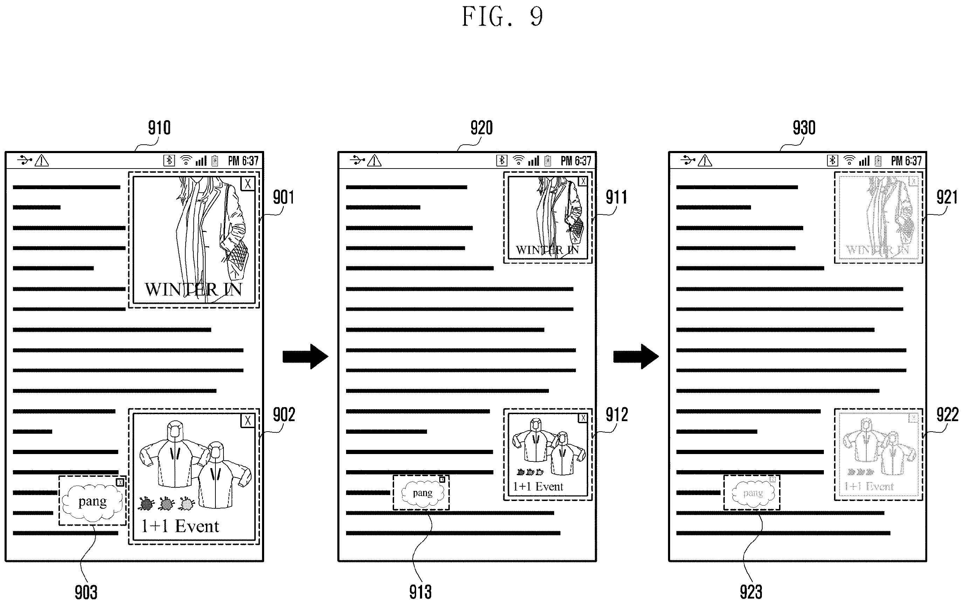

FIG. 9 illustrates an example of adjusting a size or color of advertisement content included in a webpage according to embodiments of the present disclosure.

In FIG. 9, screen 910 shows a webpage including at least one content. The processor 120 can determine advertisement contents 901, 902, and 903 from the contents included in the webpage.

According to embodiments, the processor 120 can adjust the size of the determined advertisement content. Screen 920 shows advertisement contents 911, 912, and 913 displayed by reducing the size of the advertisement content. In screen 920, the processor 120 can identify a space formed by reducing the sizes of the advertisement contents 911, 912, and 913. The processor 120 can fill the space with text. For example, the processor 120 can adjust the structure of the webpage and display the webpage based on the adjusted webpage structure.

According to embodiments, the processor 120 can display the determined advertisement content by adjusting the appearance of the advertisement content, such as by adjusting color, brightness, or chroma of the advertisement content. Screen 930 shows advertisement contents 921, 922, and 923 dimmed by adjusting the color, brightness, or chroma of the advertisement content. In screen 930, the processor 120 can display the advertisement contents in a dimmed form by adjusting the color, brightness, or chroma of the size-reduced advertisement contents 921, 922, and 923; however, the function of the processor 120 is not limited to this example, and the processor 120 can display the advertisement content in a dimmed form regardless of the size of the advertisement content.

According to embodiments, the processor 120 can detect a user input for adjusting the size and color of the advertisement content, and can restore the advertisement content if the user input is detected. For example, responding to the user input, the processor 120 can restore the previous advertisement content without size and color adjustment, from the size and color adjusted advertisement content.

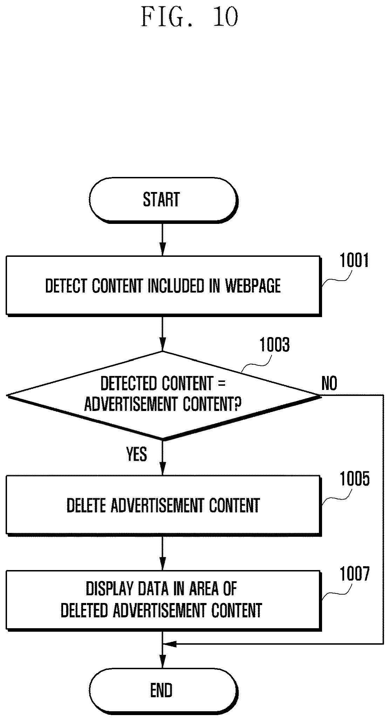

FIG. 10 illustrates a method for displaying predetermined data instead of advertisement content included in a webpage according to embodiments of the present disclosure.

In step 1001, the processor 120 of the electronic device 101 detects content included in a webpage. In step 1003, the processor 120 determines whether the detected content is advertisement content. Steps 1001 and 1003 of FIG. 10 can be performed in an identical or similar manner to steps 401 and 403 of FIG. 4.

If the detected content is determined to be advertisement content in step 1003, the processor 120 deletes the advertisement content from the webpage in step 1005. According to embodiments, the processor 120 can move the deleted advertisement content to an area other than the webpage. In step 1007, the processor 120 displays other data in the area of the deleted advertisement content, i.e., an area where the advertisement content was located. For example, the processor 120 can display a notice message or data stored in the memory 130 in the area of the deleted advertisement content. If the detected content is not the advertisement content in step 1003, the method ends.

According to embodiments of the present disclosure, the processor 120 can remove the advertisement content included in the webpage, and can provide necessary data, such as a notice message, for a user in the area where the advertisement content was located. For example, the user can identify a notice message from the webpage without switching to another screen.

FIG. 11 illustrates an example of displaying predetermined data instead of advertisement content included in a webpage according to embodiments of the present disclosure.

In FIG. 11, screen 1110 shows a webpage including at least one content. The processor 120 can determine advertisement contents 1101, 1102, and 1103 from the contents included in the webpage. In screen 1120, the processor 120 can determine advertisements 1101 and 1102 to be deleted from the advertisement contents 1101, 1102, and 1103, and can display empty spaces 1151 and 1152 in the areas of the deleted advertisement contents 1101 and 1102.

According to embodiments, the processor 120 can delete advertisement content and display other data in the area where the advertisement content was located. For example, the processor 120 can display a notice message, such as push message, SMS message, and telephone call notice message, or data for a specific application in the area where the deleted advertisement content was located.

In screen 1130, the processor 120 can display news information 1111 or a notice message 1112 in the areas of the deleted advertisement contents 1101 and 1102, and can determine data to be displayed according to a user setting.

The advertisement content can be deleted from the webpage, if the advertisement content is displayed in the webpage through a virtual reality (VR) browser. In examples, the processor 120 can display the deleted advertisement content in an area where information is not posted in the VR browser, can display the advertisement content full-time in the VR browser or only when a user views the VR browser, and can delete the advertisement content and display other tabs or control menus provided by other screens.

According to an embodiment of the present disclosure, a method for displaying a webpage in an electronic includes displaying a webpage, detecting at least one content included in the displayed webpage, determining whether the detected content is advertisement content, moving the advertisement content to a predetermined area if the content is the advertisement content, and displaying the advertisement content in the predetermined area.

Moving the advertisement content to a predetermined area may include converting the advertisement content to an object by adjusting the size of the advertisement content based on the predetermined area, and moving the converted object to the predetermined area.

The method may further include deleting the advertisement content from the webpage if the content is the advertisement content, identifying an area where the deleted content was located, and displaying predetermined data in the identified area.

The method may further include adjusting a size or color, brightness, or chroma of the advertisement content if the content is the advertisement content.

The method may further include adjusting the structure of the webpage based on the size of the advertisement content if the size of the advertisement content is adjusted, and displaying the webpage based on the adjusted structure of the webpage.

The method may further include restoring the advertisement content if a user input is detected corresponding to the size or color adjustment of the advertisement content, deleting an animation effect, changing a frame of the animation effect, or displaying the advertisement content in a still image form, if the advertisement content includes the animation effect.

The term "module" used in this disclosure may refer to a unit that includes one of hardware, software and firmware or any combination thereof. The module may be interchangeably used with unit, logic, logical block, component or circuit, for example, may be the minimum unit, or part thereof, which performs one or more particular functions, and may also be formed mechanically or electronically. For example, the module disclosed herein may include at least one of an application-specific integrated circuit (ASIC) chip, field-programmable gate arrays (FPGAs), and programmable-logic device, which have been known or are to be developed in the future.

At least part of the device or operations according to embodiments may be implemented as commands stored, e.g., in the form of program modules, in a computer-readable storage medium. When commands are executed by at least one processor, this processor may then be configured to perform a particular function corresponding to the commands. The computer-readable storage medium may be the memory. At least some of the program modules may be implemented by the processor and may include a module, a program, a routine, a set of instructions, and/or a process for performing one or more functions.

The non-transitory computer-readable recording medium may include magnetic media such as a hard disk, a floppy disk, and a magnetic tape, optical media such as a compact disc-ROM (CD-ROM) and a DVD, magneto-optical media such as a floptical disk, and hardware devices specially configured to store and perform a program instruction. In addition, the program instructions may include high class language codes, which can be executed in a computer by using an interpreter, as well as machine codes made by a compiler. The aforementioned hardware device may be configured to operate as one or more software modules in order to perform embodiments of the present disclosure, and vice versa.

A module or programming module according to embodiments may include or exclude at least one of the above-discussed elements or further include other elements or combinations thereof. The operations performed by the module, programming module or any other element according to embodiments may be executed sequentially, in parallel, repeatedly, or by a heuristic method. Additionally, some operations may be executed in different orders or omitted, or other operations may be added.

While the present disclosure has been shown and described in embodiments thereof, it will be understood by those skilled in the art that various changes in form and detail may be made therein without departing from the scope of the present disclosure as defined by the appended claims.

## Claims

1. An electronic device comprising:
a communication circuit;
a display unit;
at least one processor electrically connected to the communication circuit and the display unit; and
a memory electrically connected to the at least one processor,
wherein the memory stores instructions to be executed by the at least one processor and causing the at least one processor to detect at least one content included in a webpage if the webpage is displayed through the display unit, determine whether the detected content is advertisement content, and display the advertisement content by moving the advertisement content to a predetermined area if the detected content is the advertisement content.

2. The electronic device of claim 1, wherein, when the instructions are executed, the at least one processor converts the advertisement content to an object based on the predetermined area, and displays the converted object by moving the converted object to the predetermined area,
wherein the conversion of the advertisement content is performed by adjusting at least one of a size, a form, a structure, or a color of the advertisement content.

3. The electronic device of claim 1, wherein, when the instructions are executed, the at least one processor deletes the advertisement content from the webpage if the detected content is the advertisement content, identifies an area where the deleted advertisement content was located, and displays predetermined data in the identified area,
wherein the predetermined data comprises a notice message including at least one of a push message, a short message service message, and a telephone call signal.

4. The electronic device of claim 1, wherein, when the instructions are executed, the at least one processor adjusts at least one of a size, color, a brightness or a chroma of the advertisement content if the detected content is the advertisement content.

5. The electronic device of claim 4, wherein, when the instructions are executed, the at least one processor adjusts a structure of the webpage based on the size of the advertisement content if the size of the advertisement content is adjusted and displays at least one part of the content of the webpage in at least one part of the adjusted structure of the webpage.

6. The electronic device of claim 4, wherein, when the instructions are executed, the at least one processor restores the advertisement content if a user input is detected corresponding to at least one the size or color adjustment of the advertisement content.

7. The electronic device of claim 1, wherein, when the instructions are executed, the at least one processor deletes an animation effect, changes a frame of the animation effect, or displays the advertisement content in a still image form, if the advertisement content includes the animation effect.

8. The electronic device of claim 1, wherein the predetermined area comprises an area corresponding to an upper, lower, or side area of the webpage, at least one part of a screen of the electronic device, or at least one part of a screen of another electronic device connected to the electronic device.

9. A method for displaying a webpage in an electronic device, the method comprising:
displaying a webpage;
detecting at least one content included in the displayed webpage;
determining whether the detected content is advertisement content;
moving the advertisement content to a predetermined area if the detected content is the advertisement content; and
displaying the advertisement content in the predetermined area.

10. The method of claim 9, wherein moving the advertisement content to the predetermined area comprises:
converting the advertisement content to an object by adjusting a size of the advertisement content based on the predetermined area; and
moving the converted object to the predetermined area.

11. The method of claim 9, further comprising:
deleting the advertisement content from the webpage if the detected content is the advertisement content;
identifying an area where the deleted content was located; and
displaying predetermined data in the identified area.

12. The method of claim 11, further comprising:
adjusting at least one of a size, color, a brightness or a chroma of the advertisement content if the detected content is the advertisement content.

13. The method of claim 12, further comprising:
adjusting a structure of the webpage based on the size of the advertisement content if the size of the advertisement content is adjusted; and
displaying the webpage based on the adjusted structure of the webpage.

14. The method of claim 12, further comprising:
restoring the advertisement content if a user input is detected corresponding to at least one of the size or color adjustment of the advertisement content.

15. The method of claim 9, further comprising:
deleting an animation effect, changing a frame of the animation effect, or displaying the advertisement content in a still image form, if the advertisement content includes the animation effect.
